# EUROPEAN PATENT APPLICATION

(11) **EP 4 668 603 A1**
(43) Date of publication of application: **24.12.2025**
(21) Application number: 24756284.6
(22) Date of filing: 08.02.2024
(51) Int. Cl.: H04B 7/06, H04W 8/24

(54) **MULTI-ANTENNA TRANSMIT DIVERSITY INDICATION METHOD, AND TERMINAL AND NETWORK-SIDE DEVICE**

(30) Priority: 17.02.2023 CN 202310139648
(71) Applicant: Vivo Mobile Communication Co., Ltd., Dongguan, Guangdong 523863 (CN)
(72) Inventor: FENG, Sanjun, Dongguan, Guangdong 523863 (CN); LIU, Ziqi, Dongguan, Guangdong 523863 (CN); WANG, Ruixin, Dongguan, Guangdong 523863 (CN)
(74) Representative: dompatent
(86) International application number: PCT/CN2024/076874
(87) International publication number: WO 2024/169911

(57) **Abstract**

This application relates to the field of communication technologies, and discloses a multi-antenna transmit diversity indication method, a terminal, and a network side device. The multi-antenna transmit diversity indication method in embodiments of this application includes: A terminal sends first information to a network side device, where the first information includes at least one of the following: transmit diversity capability information of the terminal and transmit diversity state information of the terminal. The transmit diversity capability information is used for indicating a maximum quantity of physical antennas supported by the terminal for transmit diversity. The transmit diversity state information is used for indicating an actual multi-antenna transmit diversity state of the terminal and/or an actual quantity of physical antennas for multi-antenna transmit diversity.

## Description

### CROSS-REFERENCE TO RELATED APPLICATIONS

This application claims priority to Chinese Patent Application No. 202310139648.6 filed in China on February 17, 2023, which is incorporated herein by reference in its entirety.

### TECHNICAL FIELD

This application relates to the field of communication technologies, and in particular, to a multi-antenna transmit diversity indication method, a terminal, and a network side device.

### BACKGROUND

Transmit diversity (Tx Diversity) is a multi-antenna virtualization (Antenna virtualization) technology. A plurality of physical antennas may be simulated as a virtual antenna, which is also referred to as a transparent transmit diversity (Transparent Tx Diversity). To increase flexibility of implementation by a terminal or a network side device, how to implement a transmit diversity indication method is a problem needing to be resolved by a person skilled in the art.

### SUMMARY

Embodiments of this application provide a multi-antenna transmit diversity indication method, a terminal, and a network side device, to resolve a problem about how to implement a transmit diversity indication method, thereby improving implementation flexibility of the terminal or the network side device.

According to a first aspect, a multi-antenna transmit diversity indication method is provided, which is performed by a terminal. The method includes:
A terminal sends first information to a network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

According to a second aspect, a multi-antenna transmit diversity indication method is provided, which is performed by a network side device. The method includes:

A network side device receives first information sent by a terminal, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

According to a third aspect, a multi-antenna transmit diversity indication apparatus is provided, including:
a sending module, configured to send first information to a network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

According to a fourth aspect, a multi-antenna transmit diversity indication apparatus is provided, including:
a receiving module, configured to receive first information sent by a terminal, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

According to a fifth aspect, a terminal is provided. The terminal includes a processor and a memory. The memory stores a program or an instruction executable in the processor. The program or the instruction, when executed by the processor, implements the steps of the method in the first aspect.

According to a sixth aspect, a terminal is provided, including a processor and a communication interface. The communication interface is configured to send first information to a network side device, where the first information includes at least one of the following: transmit diversity capability information of the terminal and transmit diversity state information of the terminal. The transmit diversity capability information is used for indicating a maximum quantity of physical antennas supported by the terminal for transmit diversity. The transmit diversity state information is used for indicating an actual multi-antenna transmit diversity state of the terminal and/or an actual quantity of physical antennas for multi-antenna transmit diversity.

According to a seventh aspect, a network side device is provided. The network side device includes a processor and a memory. The memory stores a program or an instruction executable in the processor. The program or the instruction, when executed by the processor, implements the steps of the method in the second aspect.

According to an eighth aspect, a network side device is provided, including a processor and a communication interface. The communication interface is configured to receive first information sent by a terminal, where the first information includes at least one of the following: transmit diversity capability information of the terminal and transmit diversity state information of the terminal. The transmit diversity capability information is used for indicating a maximum quantity of physical antennas supported by the terminal for transmit diversity. The transmit diversity state information is used for indicating an actual multi-antenna transmit diversity state of the terminal and/or an actual quantity of physical antennas for multi-antenna transmit diversity.

According to a ninth aspect, a readable storage medium is provided. The readable storage medium stores a program or an instruction. The program or the instruction, when executed by a processor, implement the steps of the method in the first aspect or implement the steps of the method in the second aspect.

According to a tenth aspect, a wireless communication system is provided, including a terminal and a network side device. The terminal may be configured to perform the steps of the method in the first aspect, and the network side device may be configured to perform the steps of the method in the second aspect.

According to an eleventh aspect, a chip is provided. The chip includes a processor and a communication interface. The communication interface is coupled to the processor. The processor is configured to run a program or an instruction to implement the method in the first aspect or implement the method in the second aspect.

According to a twelfth aspect, a computer program/program product is provided. The computer program/program product is stored in a storage medium. The program/program product is executed by at least one processor to implement the steps of the multi-antenna transmit diversity indication method in the first aspect or the second aspect.

In embodiments of this application, the terminal sends the first information to the network side device, where the first information includes at least one of the following: transmit diversity capability information of the terminal and transmit diversity state information of the terminal. The transmit diversity capability information is used for indicating a maximum quantity of physical antennas supported by the terminal for transmit diversity. The transmit diversity state information is used for indicating an actual multi-antenna transmit diversity state of the terminal and/or an actual quantity of physical antennas for multi-antenna transmit diversity, so that the network side device is facilitated to learn the transmit diversity capability information and/or the transmit diversity state information of the terminal, thereby improving implementation flexibility of the terminal and the network side device.

### BRIEF DESCRIPTION OF THE DRAWINGS

FIG. 1 is a schematic diagram of a wireless communication system to which embodiments of this application may be applied;
FIG. 2 is a schematic flowchart I of a multi-antenna transmit diversity indication method according to an embodiment of this application;
FIG. 3 is a schematic interactive flowchart of a multi-antenna transmit diversity indication method according to an embodiment of this application;
FIG. 4 is a schematic flowchart II of a multi-antenna transmit diversity indication method according to an embodiment of this application;
FIG. 5 is a schematic structural diagram of a multi-antenna transmit diversity indication apparatus according to an embodiment of this application;
FIG. 6 is a schematic structural diagram of a multi-antenna transmit diversity indication apparatus according to an embodiment of this application;
FIG. 7 is a schematic structural diagram of a communication device according to an embodiment of this application;
FIG. 8 is a schematic structural diagram of a terminal according to an embodiment of this application; and
FIG. 9 is a schematic structural diagram of a network side device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions. Namely, solution one: including A and excluding B; solution two: including B and excluding A; and solution three: including both A and B. The character "/" generally indicates an "or" relationship between a preceding associated object and a succeeding associated object.

The term "instruction" in this application may be a direct instruction (or an explicit instruction) or an indirect instruction (or an implicit instruction). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. However, the technologies may also be applied to systems other than the NR system, such as a 6^{th} Generation (6^{th} Generation, 6G) communication system.

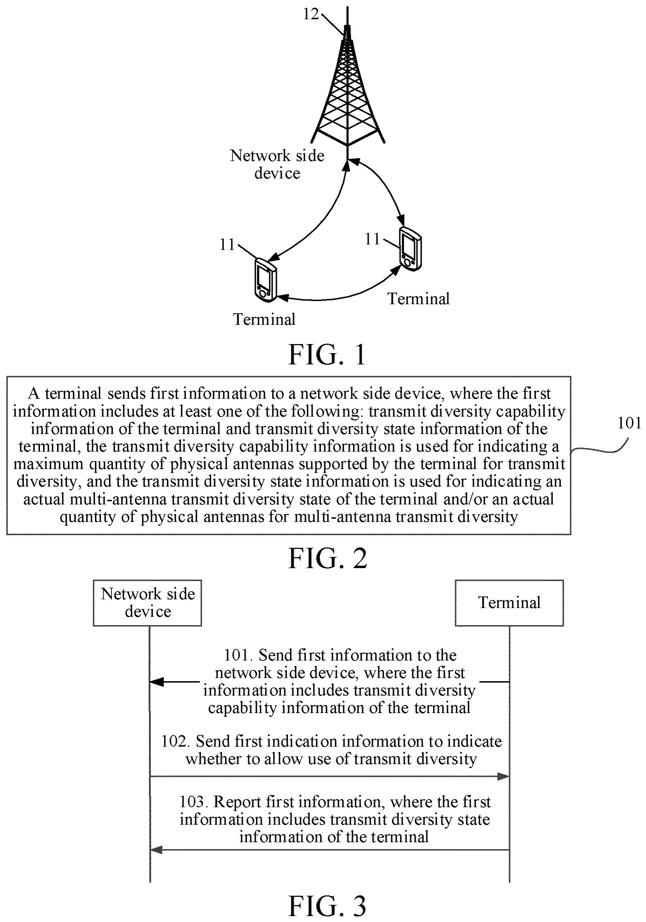

FIG. 1 is a block diagram of a wireless communication system to which embodiments of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of terminal 11 is not defined in embodiments of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another appropriate term in the art. The base station is not limited to a specific technical term, as long as the same technical effect can be achieved. It should be noted that, in this embodiment of this application, only a base station in an NR system is used as an example for description, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in embodiments of this application, but a specific type of the core network device is not limited. However, the core network device is not limit to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in embodiments of this application, but a specific type of the core network device is not limited.

In mobile communications, transmit diversity is a technology that can make full use of multiple uplink transmission links to improve transmission power. In a physical layer specification of a 3GPP NR, starting from Rel-15, the transmit diversity technology is transparent and is not explicitly standardized.

The 3GPP NR introduces a radio frequency specification and test of the transmit diversity of a terminal at Rel-17, and introduces a corresponding radio frequency indicator to a specification of the terminal. In a transmission antenna case of two transmission antennas, because a plurality of physical antennas actually exist, a corresponding radio frequency indicator is separately defined, and is different from that of a single transmission antenna. During test verification, independent test case verification for an indicator supporting the transmit diversity also exists.

A multi-antenna transmit diversity indication method provided in embodiments of this application is described in detail below through some embodiments and application scenarios with reference to the accompanying drawings.

FIG. 2 is a schematic flowchart I of a multi-antenna transmit diversity indication method according to an embodiment of this application. As shown in FIG. 2, the method includes the following step.

Step 101: A terminal sends first information to a network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

Specifically, the transmit diversity capability refers to that the terminal represents a maximum quantity of physical antennas that the terminal can participate in to form a virtual transmission antenna during transmit diversity, for example, 2Tx, 3Tx, 4Tx, 6Tx, and 8Tx.

Generally, a terminal having a 4Tx transmit diversity capability can also have a 2Tx transmit diversity capability.

The actual multi-antenna transmit diversity state may refer to whether the terminal is in a multi-antenna transmit diversity operating state.

The actual quantity of physical antennas for multi-antenna transmit diversity is an actual quantity of physical antennas used by the terminal in the multi-antenna transmit diversity operating state.

Optionally, the actual quantity of physical antennas is less than or equal to the maximum quantity of physical antennas indicated by the transmit diversity capability information.

In an actual application, whether the terminal currently operates in the multi-antenna transmit diversity state may be indicated by using true or false, for example, txdiversityEnabled = {true, false}.

According to the method in this embodiment, the terminal sends the first information to the network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity, so that the network side device is facilitated to learn the transmit diversity capability information and/or the transmit diversity state information of the terminal, thereby improving implementation flexibility of the terminal and the network side device.

Optionally, different maximum quantities of physical antennas indicated by the transmit diversity capability information of the terminal correspond to at least one of different performance requirements and test cases.

Specifically, different transmit diversity capabilities, namely, different maximum quantities of physical antennas supported by the terminal, correspond to at least one of different performance requirements and test cases. The performance requirement is, for example, a radio frequency requirement.

For example, a first field txdiversityAntNumCapability is defined and reported. A value of the first field may be selected from {2, 3, 4, 6, 8, ...}, and is used as the maximum supported quantity of physical antennas. A specific quantity may not be limited in the exemplary scope herein.

Optionally, a different value of the maximum quantity of physical antennas indicated by the first information is carried through a different first field.

For example, a plurality of first fields are defined, for example, {txdiversityAntNumCapabiliy_2Tx, txdiversityAntNumCapabiliy_3Tx, and txdiversityAntNumCapabiliy_4Tx, ...}. Each field represents a transmit diversity capability, and the terminal may select one field for reporting.

In the foregoing implementation, a different maximum quantity of physical antenna corresponds to at least one of different performance requirements and test cases, which has relatively high flexibility and relatively low implementation complexity.

Optionally, the terminal uses at least one of a performance requirement and a test case corresponding to the transmit diversity when the terminal is in a multi-antenna transmit diversity operating state, where
when the terminal is not in the multi-antenna transmit diversity operating state, at least one of the performance requirement and the test case corresponding to the transmit diversity is not applicable to the terminal.

Specifically, in an actual test, whether the terminal is in the multi-antenna transmit diversity operating state may be used to determine whether to use at least one of the performance requirement or the test case specified for the transmit diversity. Only when the terminal is in the multi-antenna transmit diversity operating state, the terminal uses at least one of a corresponding radio frequency requirement and test case for the transmit diversity.

For example, when the terminal is in the multi-antenna transmit diversity operating state, the terminal applies, based on a capability indicated in the transmit diversity capability information, at least one of the performance requirement and the test case that correspond to the maximum quantity of physical antennas corresponding to the capability.

Optionally, an actual quantity of different physical antennas used by the terminal in the multi-antenna transmit diversity operating state correspond to at least one of different performance requirements and test cases.

Specifically, the terminal reports an actual transmit diversity operating state, nominally an actual quantity of physical antennas currently used for multi-antenna transmit diversity, and different actual physical antenna quantities correspond to at least one of different performance requirements and test cases.

For example, a first field txdiversityAntNumStatus is defined. A value of the first field may be selected from {0, 2, 3, 4, 6, 8, ...} as an actual quantity of the physical antennas, and a specific quantity may not be limited in the exemplary scope herein.

Optionally, when a value of the first field is a first numerical value, the terminal is not in the multi-antenna transmit diversity operating state; and
when the value of the first field is greater than the first numerical value, the terminal is in the multi-antenna transmit diversity operating state.

Specifically, for example, the first numerical value is 0, it indicates that transmit diversity is not actually used. In other words, the terminal is not in the multi-antenna transmit diversity operating state. Another value greater than zero indicates that the transmit diversity is used. In other words, the terminal is in the multi-antenna transmit diversity operating state, and also indicates an actual quantity of the physical antennas used in a current state.

Alternatively, a plurality of second fields may be defined, for example, {txdiversityAntNumStatus_0Tx, txdiversityAntNumStatus_2Tx, txdiversityAntNumStatus_3Tx, and txdiversityAntNumStatus_4Tx, ...}, and one field is selected for reporting. Each field represents an actual quantity of physical antennas.

Alternatively, whether the terminal device is in the multi-antenna transmit diversity operating state and the actual quantity of the physical antennas may be indicated through independent signaling. This is not limited in this embodiment of this application.

In another embodiment, for example, when the value of the first field is less than a second numerical value, the terminal is not in the multi-antenna transmit diversity operating state; and
when the value of the first field is greater than or equal to the second numerical value, the terminal is in the multi-antenna transmit diversity operating state.

In the foregoing implementation, the transmit diversity state information is reported, so that the network side device learns more of the transmit diversity state information of the terminal, thereby facilitating a better decision of the network side device, for example, better distinguishing between different performance requirement indicators and test cases, facilitating development and verification of a test indicator, and providing great flexibility.

Optionally, a granularity of the first information is a band, a band combination, a band combination in each band, or a terminal.

Specifically, a reporting granularity of the first information may be a band (per band), a band combination (band combination), or may be a band combination in each band (per band per band combination), or a terminal (per-UE).

In the foregoing implementation, the reporting granularity may be a plurality of different granularities, and is relatively flexible.

Optionally, referring to FIG. 3, the method further includes:

The terminal receives first indication information sent by the network side device, where the first indication information is used for indicating whether the terminal is allowed to use the transmit diversity.

Specifically, the network side device may configure whether the terminal uses the multi-antenna transmit diversity. For example, the network side device may deliver the first indication information (step 102 in FIG. 3), for example, the indication information is implemented through a field DisableTransparentTxD. When the field is True, the terminal is prohibited to use the multi-antenna transmit diversity, and when the field is false, the terminal is allowed to use the multi-antenna transmit diversity. An opposite logic may also be used, for example, implemented through a field EnableTransparentTxD. When the field is True, the terminal is allowed to use the multi-antenna transmit diversity, and when the field is false, the terminal is not allowed to use the multi-antenna transmit diversity.

Optionally, when the first indication information is used for indicating that the terminal is allowed to use the transmit diversity, the terminal uses at least one of the performance requirement and the test case corresponding to the transmit diversity; and
when the first indication information is used for indicating that the terminal is prohibited from using the transmit diversity, at least one of the performance requirement and the test case corresponding to the transmit diversity is not applicable to the terminal.

Specifically, when the network side device prohibits the terminal from using the multi-antenna transmit diversity, the corresponding performance requirement and/or test case cannot be used in a test process. In other words, at least one of the performance requirement and the test case corresponding to the transmit diversity is not applicable to the terminal.

Optionally, as shown in FIG. 3, the first indication information is sent by the network side device after receiving the transmit diversity capability information sent by the terminal.

Further, as shown in FIG. 3, when receiving the first indication information, the terminal may further perform step 103, namely, send the transmit diversity state information to the network side device.

In the foregoing implementation, the network side device may control whether the terminal uses the transmit diversity, which can provide the network side device with more flexibility to control a terminal behavior.

Optionally, the terminal sends the first information to the network side device when second indication information sent by the network side device is received, where the second indication information is used for instructing the terminal to report the first information.

In some embodiments, the second indication information may alternatively be the first indication information. In other words, after the terminal receives the indication information used for indicating whether to allow the terminal to use the transmit diversity, the terminal may start reporting.

In the foregoing implementation, the terminal may report the first information in a case of the indication of the network side device, and the terminal does not need to make a decision, resulting in low implementation complexity.

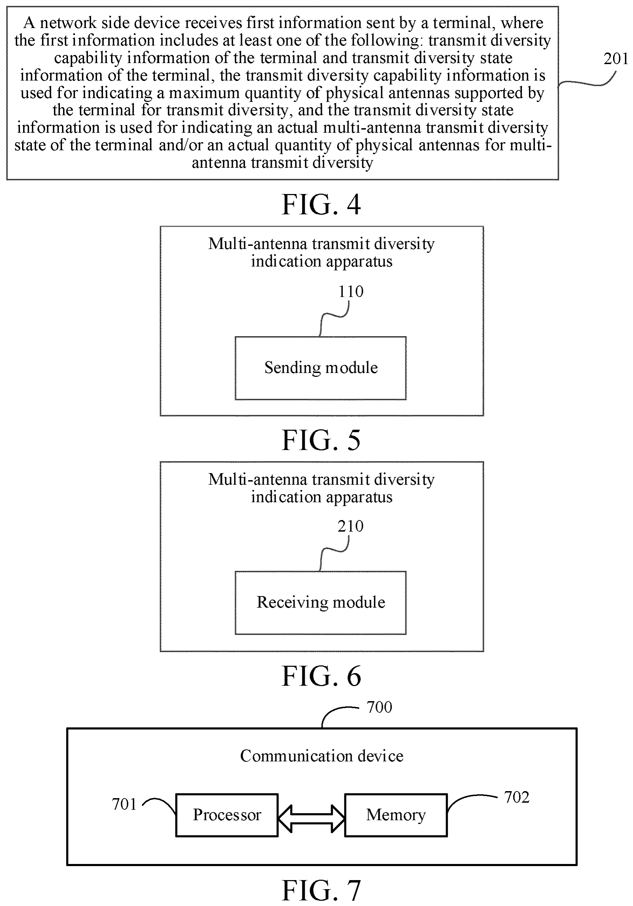

FIG. 4 is a schematic flowchart II of a multi-antenna transmit diversity indication method according to an embodiment of this application. As shown in FIG. 4, the method includes the following step.

Step 201: A network side device receives first information sent by a terminal, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

Optionally, different maximum quantities of physical antennas indicated by the transmit diversity capability information of the terminal correspond to at least one of different performance requirements and test cases.

Optionally, an actual quantity of different physical antennas used by the terminal in the multi-antenna transmit diversity operating state correspond to at least one of different performance requirements and test cases.

Optionally, the method further includes:

The network side device sends first indication information to the terminal, where the first indication information is used for indicating whether the terminal is allowed to use the transmit diversity.

Optionally, the first indication information is sent by the network side device after receiving the transmit diversity capability information sent by the terminal.

Optionally, before the network side device receives the first information sent by the terminal, the method further includes:

The network side device sends second indication information to the terminal, where the second indication information is used for instructing the terminal to report the first information.

Optionally, the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state and uses the transmit diversity.

Optionally, a different value of the maximum quantity of physical antennas or the actual quantity of physical antennas indicated by the first information is carried through a different first field.

Optionally, a granularity of the first information is a band, a band combination, a band combination in each band, or a terminal.

Optionally, when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

A specific implementation process and technical effects of the method in this embodiment are the same as those in the method embodiment of the terminal side. For details, reference may be made to the detailed description in the method embodiment of the terminal side. Details are not described herein.

An execution body of the multi-antenna transmit diversity indication method provided in embodiments of this application may be a multi-antenna transmit diversity indication apparatus. In embodiments of this application, the multi-antenna transmit diversity indication apparatus provided in embodiments of this application is described by using an example in which the multi-antenna transmit diversity indication apparatus performs the multi-antenna transmit diversity indication method.

FIG. 5 is a schematic structural diagram I of a multi-antenna transmit diversity indication apparatus according to an embodiment of this application. As shown in FIG. 5, the multi-antenna transmit diversity indication apparatus is applied to the terminal and includes:
a sending module 110, configured to send first information to a network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

Optionally, different maximum quantities of physical antennas indicated by the transmit diversity capability information of the terminal correspond to at least one of different performance requirements and test cases.

Optionally, the apparatus further includes:
a processing module, configured to use at least one of a performance requirement and a test case corresponding to the transmit diversity when the terminal is in a multi-antenna transmit diversity operating state, where
when the terminal is not in the multi-antenna transmit diversity operating state, at least one of the performance requirement and the test case corresponding to the transmit diversity is not applicable to the terminal.

Optionally, an actual quantity of different physical antennas used by the terminal in the multi-antenna transmit diversity operating state correspond to at least one of different performance requirements and test cases.

Optionally, the apparatus further includes:
a receiving module, configured to receive first indication information sent by the network side device, where the first indication information is used for indicating whether the terminal is allowed to use the transmit diversity.

Optionally, the first indication information is sent by the network side device after receiving the transmit diversity capability information sent by the terminal.

Optionally, when the first indication information is used for indicating that the terminal is allowed to use the transmit diversity, the terminal uses at least one of the performance requirement and the test case corresponding to the transmit diversity; and
when the first indication information is used for indicating that the terminal is prohibited from using the transmit diversity, at least one of the performance requirement and the test case corresponding to the transmit diversity is not applicable to the terminal.

Optionally, the sending module 110 is specifically configured to:
send the first information to the network side device when second indication information sent by the network side device is received, where the second indication information is used for instructing the terminal to report the first information.

Optionally, the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state.

Optionally, a different value of the maximum quantity of physical antennas or the actual quantity of physical antennas indicated by the first information is carried through a different first field.

Optionally, a granularity of the first information is a band, a band combination, a band combination in each band, or a terminal.

Optionally, when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

The apparatus in this embodiment may be configured to perform the method in any embodiment of the above method embodiments of the terminal side, and a specific implementation process and technical effects thereof are the same as those in the method embodiments of the terminal side. For details, reference may be made to the detailed description in the method embodiments of the terminal side. Details are not described herein.

FIG. 6 is a schematic structural diagram II of a multi-antenna transmit diversity indication apparatus according to an embodiment of this application. As shown in FIG. 6, the multi-antenna transmit diversity indication apparatus is applied to the network side device and includes:
a receiving module 210, configured to receive first information sent by a terminal, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

Optionally, different maximum quantities of physical antennas indicated by the transmit diversity capability information of the terminal correspond to at least one of different performance requirements and test cases.

Optionally, an actual quantity of different physical antennas used by the terminal in the multi-antenna transmit diversity operating state correspond to at least one of different performance requirements and test cases.

Optionally, the apparatus further includes:
a sending module, configured to send first indication information to the terminal, where the first indication information is used for indicating whether the terminal is allowed to use the transmit diversity.

Optionally, the first indication information is sent by the network side device after receiving the transmit diversity capability information sent by the terminal.

Optionally, the sending module is further configured to:
send second indication information to the terminal, where the second indication information is used for instructing the terminal to report the first information.

Optionally, the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state and uses the transmit diversity.

Optionally, a different value of the maximum quantity of physical antennas or the actual quantity of physical antennas indicated by the first information is carried through a different first field.

Optionally, a granularity of the first information is a band, a band combination, a band combination in each band, or a terminal.

Optionally, when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

The apparatus in this embodiment may be configured to perform the method in any embodiment of the above method embodiments of the network side device, and a specific implementation process and technical effects thereof are the same as those in the method embodiments of the network side device. For details, reference may be made to the detailed description in the method embodiments of the network side device. Details are not described herein.

The multi-antenna transmit diversity indication apparatus in embodiments of this application may be an electronic device, for example, an electronic device having an operating system, or a component in an electronic device, such as an integrated circuit or a chip. The electronic device may be a terminal, or may be another device other than the terminal. For example, the terminal may include but is not limited to the foregoing listed types of the terminal 11. The another device may be a server, a network attached storage (Network Attached Storage, NAS), or the like, which is not specifically limited in embodiments of this application.

The multi-antenna transmit diversity indication apparatus provided in embodiments of this application can implement each process implemented in the method embodiment of FIG. 2 to FIG. 4, and achieve the same technical effects. To avoid repetition, details are not described herein again.

As shown in FIG. 7, an embodiment of this application further provides a communication device 700, including a processor 701 and a memory 702. The memory 702 stores a program or an instruction executable on the processor 701. For example, when the communication device 700 is a terminal, the program or the instruction, when executed by the processor 701, implements various steps of embodiments of the foregoing multi-antenna transmit diversity indication method, and can achieve the same technical effects. When the communication device 700 is a network side device, the program or the instruction, when executed by the processor 701, implements various steps of embodiments of the foregoing multi-antenna transmit diversity indication method, and can achieve the same technical effects. To avoid repetition, details are not described herein again.

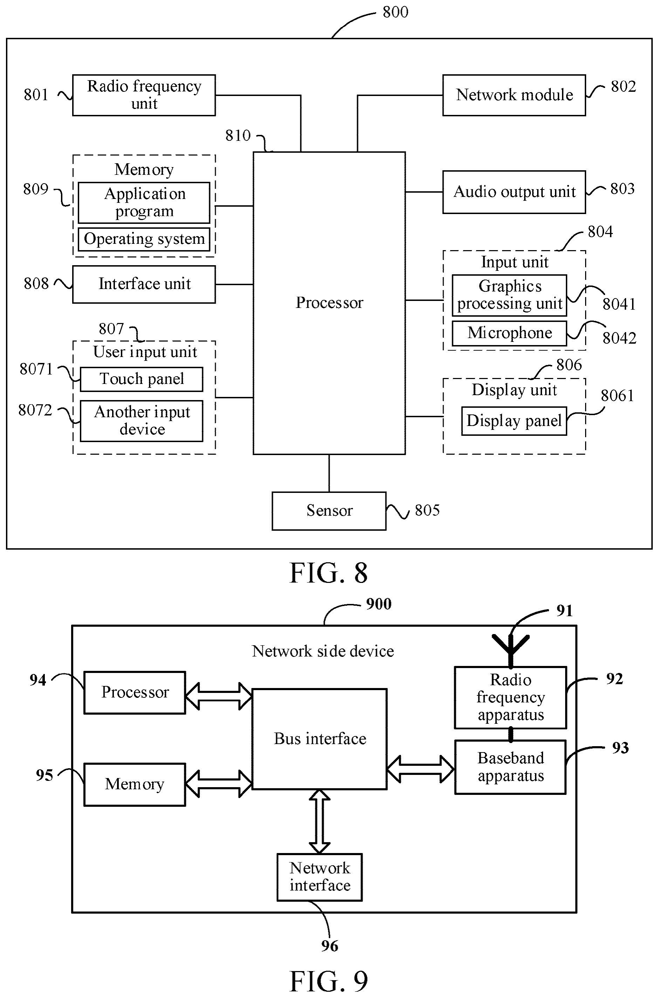

An embodiment of this application further provides a terminal, including a processor and a communication interface. The communication interface is coupled to the processor, and the processor is configured to run a program or an instruction, to implement the steps of the method embodiment shown in FIG. 2. The terminal embodiment corresponds to the foregoing method embodiment of the terminal side. The implementation processes and implementations of the foregoing method embodiment are all applicable to the terminal embodiment, and can achieve the same technical effects. Specifically, FIG. 8 is a schematic diagram of a hardware structure of a terminal for implementing an embodiment of this application.

The terminal 800 includes, but is not limited to, at least some of components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) that supplies power to the components. The power supply may be logically connected to the processor 810 through a power management system, thereby implementing functions such as management of charging, discharging, and power consumption through the power management system. The terminal structure shown in FIG. 8 constitutes no limitation on the terminal, and the terminal may include more or fewer components than those shown in the figure, or some merged components, or different component arrangements. Details are not described herein again.

It should be noted that, in this embodiment of this application, the input unit 804 may include a graphics processing unit (Graphics Processing Unit, GPU) 8041 and a microphone 8042. The graphics processing unit 8041 processes image data of a static picture or a video obtained by an image capturing apparatus (for example, a camera) in a video capturing mode or an image capturing mode. The display unit 806 may include a display panel 8061. The display panel 8061 may be configured in a form such as a liquid crystal display or an organic light-emitting diode. The user input unit 807 includes at least one of a touch panel 8071 and another input device 8072. The touch panel 8071 is also referred to as a touch screen. The touch panel 8071 may include two parts: a touch detection apparatus and a touch controller. The another input device 8072 may include but is not limited to a physical keyboard, a function button (such as a volume control button or a power button), a trackball, a mouse, and a joystick. Details are not described herein.

In this embodiment of this application, the radio frequency unit 801 receives downlink data from a network side device and may provide the downlink data to the processor 810 for processing. In addition, the radio frequency unit 801 may send uplink data to the network side device. Generally, the radio frequency unit 801 includes, but is not limited to, an antenna, an amplifier, a transceiver, a coupler, a low noise amplifier, a duplexer, and the like.

The memory 809 may be configured to store a software program or instructions and various data. The memory 809 may mainly include a first storage area for storing a program or an instruction and a second storage area for storing data. The first storage area may store an operating system, an application program or an instruction required for at least one function (such as a sound playback function and an image playback function), and the like. In addition, the memory 809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 809 in this embodiment of this application includes, but is not limited to, these memories and any other suitable types of memories.

The processor 810 may include one or more processing units. Optionally, the processor 810 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 810.

The radio frequency unit 801 is configured to send first information to a network side device, where the first information includes at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

Optionally, different maximum quantities of physical antennas indicated by the transmit diversity capability information of the terminal correspond to at least one of different performance requirements and test cases.

Optionally, the processor 810 is configured to use at least one of a performance requirement and a test case corresponding to the transmit diversity when the terminal is in a multi-antenna transmit diversity operating state, where
when the terminal is not in the multi-antenna transmit diversity operating state, at least one of the performance requirement and the test case corresponding to the transmit diversity is not applicable to the terminal.

Optionally, an actual quantity of different physical antennas used by the terminal in the multi-antenna transmit diversity operating state correspond to at least one of different performance requirements and test cases.

Optionally, the radio frequency unit 801 is further configured to:
receive first indication information sent by the network side device, where the first indication information is used for indicating whether the terminal is allowed to use the transmit diversity.

Optionally, the first indication information is sent by the network side device after receiving the transmit diversity capability information sent by the terminal.

Optionally, when the first indication information is used for indicating that the terminal is allowed to use the transmit diversity, the terminal uses at least one of the performance requirement and the test case corresponding to the transmit diversity; and
when the first indication information is used for indicating that the terminal is prohibited from using the transmit diversity, at least one of the performance requirement and the test case corresponding to the transmit diversity is not applicable to the terminal.

Optionally, the radio frequency unit 801 is specifically configured to:
send the first information to the network side device when second indication information sent by the network side device is received, where the second indication information is used for instructing the terminal to report the first information.

Optionally, the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state.

Optionally, a different value of the maximum quantity of physical antennas or the actual quantity of physical antennas indicated by the first information is carried through a different first field.

Optionally, a granularity of the first information is a band, a band combination, a band combination in each band, or a terminal.

Optionally, when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

It may be understood that the implementation process of each implementation in this embodiment may refer to the relevant description of the method embodiments of the terminal side, and the same or corresponding technical effects are achieved. To avoid repetition, details are not described herein again.

An embodiment of this application further provides a network side device, including a processor and a communication interface. The communication interface is coupled to the processor, and the processor is configured to run a program or an instruction, to implement the steps of the method embodiment shown in FIG. 4. The network side device embodiment corresponds to the foregoing method embodiment of the network side device. The implementation processes and implementations of the foregoing method embodiment are all applicable to the embodiment of the network side device, and can achieve the same technical effects.

Specifically, an embodiment of this application further provides a network side device. As shown in FIG. 9, the network side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information through the antenna 91, and sends the received information to the baseband apparatus 93 for processing. In a downlink direction, the baseband apparatus 93 processes to-be-sent information, and sends the processed to-be-sent information to the radio frequency apparatus 92. The radio frequency apparatus 92 processes the received information, and then sends the processed information through the antenna 91.

The method performed by the network side device in the foregoing embodiment may be implemented by the baseband apparatus 93. The baseband apparatus 93 includes a baseband processor.

The baseband apparatus 93 may include, for example, at least one baseband board. A plurality of chips are arranged on the baseband board, as shown in FIG. 9. One of the chips is, for example, a baseband processor, and is connected to the memory 95 through a bus interface to call a program in the memory 95, to perform the operations of the network device shown in the foregoing method embodiment.

The network side device may further include a network interface 96. The interface is, for example, a common public radio interface (Common Public Radio Interface, CPRI).

Specifically, the network side device 900 in this embodiment of this application further includes an instruction or a program stored in the memory 95 and executable on the processor 94. The processor 94 calls the instruction or the program in the memory 95 to perform the method performed by each module shown in FIG. 6, and achieves the same technical effects. To avoid repetition, details are not described herein.

An embodiment of this application further provides a readable storage medium. The readable storage medium stores a program or an instruction. The program or the instruction, when executed by a processor, implements the processes of the foregoing embodiments of the multi-antenna transmit diversity indication method, and can achieve the same technical effects. To avoid repetition, details are not described herein again.

The processor is a processor of the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or an instruction, to implement the processes of the foregoing embodiments of the multi-antenna transmit diversity indication method, and can achieve the same technical effects. To avoid repetition, details are not described herein again.

It should be understood that, the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing embodiments of the multi-antenna transmit diversity indication method, and can achieve the same technical effects. To avoid repetition, details are not described herein again.

An embodiment of this application further provides a communication system, including a terminal and a network side device. The terminal may be configured to perform the steps of the foregoing multi-antenna transmit diversity indication method. The network side device may be configured to perform the steps of the foregoing multi-antenna transmit diversity indication method.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

Through the description of the foregoing implementations, a person skilled in the art may clearly understand that the foregoing method embodiments may be implemented by means of a computer software product and a necessary general hardware platform, and certainly, may alternatively be implemented by means of hardware. The computer software product is stored in a storage medium (such as a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A multi-antenna transmit diversity indication method, comprising:
sending, by a terminal, first information to a network side device, wherein the first information comprises at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

2. The multi-antenna transmit diversity indication method according to claim 1, wherein
different maximum quantities of physical antennas indicated by the transmit diversity capability information of the terminal correspond to at least one of different performance requirements and test cases.

3. The multi-antenna transmit diversity indication method according to claim 1, further comprising:
using, by the terminal, at least one of a performance requirement and a test case corresponding to the transmit diversity when the terminal is in a multi-antenna transmit diversity operating state, wherein
when the terminal is not in the multi-antenna transmit diversity operating state, at least one of the performance requirement and the test case corresponding to the transmit diversity is not applicable to the terminal.

4. The multi-antenna transmit diversity indication method according to claim 3, wherein
an actual quantity of different physical antennas used by the terminal in the multi-antenna transmit diversity operating state correspond to at least one of different performance requirements and test cases.

5. The multi-antenna transmit diversity indication method according to any one of claims 1 to 4, further comprising:
receiving, by the terminal, first indication information sent by the network side device, wherein the first indication information is used for indicating whether the terminal is allowed to use the transmit diversity.

6. The multi-antenna transmit diversity indication method according to claim 5, wherein
the first indication information is sent by the network side device after receiving the transmit diversity capability information sent by the terminal.

7. The multi-antenna transmit diversity indication method according to claim 5, wherein
when the first indication information is used for indicating that the terminal is allowed to use the transmit diversity, the terminal uses at least one of the performance requirement and the test case corresponding to the transmit diversity; and
when the first indication information is used for indicating that the terminal is prohibited from using the transmit diversity, at least one of the performance requirement and the test case corresponding to the transmit diversity is not applicable to the terminal.

8. The multi-antenna transmit diversity indication method according to any one of claims 1 to 4, wherein the sending, by a terminal, first information to a network side device comprises:
sending, by the terminal, the first information to the network side device when second indication information sent by the network side device is received, wherein the second indication information is used for instructing the terminal to report the first information.

9. The multi-antenna transmit diversity indication method according to any one of claims 1 to 8, wherein
the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state.

10. The multi-antenna transmit diversity indication method according to claim 9, wherein
a different value of the maximum quantity of physical antennas or the actual quantity of physical antennas indicated by the first information is carried through a different first field.

11. The multi-antenna transmit diversity indication method according to any one of claims 1 to 10, wherein a granularity of the first information is a band, a band combination, a band combination in each band, or a terminal.

12. The multi-antenna transmit diversity indication method according to any one of claims 1 to 10, wherein
when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

13. A multi-antenna transmit diversity indication method, comprising:
receiving, by a network side device, first information sent by a terminal, wherein the first information comprises at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

14. The multi-antenna transmit diversity indication method according to claim 13, wherein
different maximum quantities of physical antennas indicated by the transmit diversity capability information of the terminal correspond to at least one of different performance requirements and test cases.

15. The multi-antenna transmit diversity indication method according to claim 13, wherein
an actual quantity of different physical antennas used by the terminal in the multi-antenna transmit diversity operating state correspond to at least one of different performance requirements and test cases.

16. The multi-antenna transmit diversity indication method according to any one of claims 13 to 15, further comprising:
sending, by the network side device, first indication information to the terminal, wherein the first indication information is used for indicating whether the terminal is allowed to use the transmit diversity.

17. The multi-antenna transmit diversity indication method according to claim 16, wherein
the first indication information is sent by the network side device after receiving the transmit diversity capability information sent by the terminal.

18. The multi-antenna transmit diversity indication method according to any one of claims 13 to 15, wherein before the receiving, by a network side device, first information sent by a terminal, the method further comprises:
sending, by the network side device, second indication information to the terminal, wherein the second indication information is used for instructing the terminal to report the first information.

19. The multi-antenna transmit diversity indication method according to any one of claims 13 to 18, wherein
the first information is carried through a first field;
when a value of the first field is a first numerical value, the terminal is not in the multi-antenna transmit diversity operating state; and
when the value of the first field is greater than the first numerical value, the terminal is in the multi-antenna transmit diversity operating state and uses the transmit diversity.

20. The multi-antenna transmit diversity indication method according to claim 19, wherein
a different value of the maximum quantity of physical antennas indicated by the first information is carried through a different first field.

21. The multi-antenna transmit diversity indication method according to any one of claims 13 to 20, wherein a granularity of the first information is a band, a band combination, a band combination in each band, or a terminal.

22. The multi-antenna transmit diversity indication method according to any one of claims 13 to 21, wherein
when the terminal is in the multi-antenna transmit diversity operating state, the actual quantity of physical antennas used by the terminal in the multi-antenna transmit diversity operating state is less than or equal to the maximum quantity of physical antennas indicated by the transmit diversity capability information.

23. A multi-antenna transmit diversity indication apparatus, comprising:
a sending module, configured to send first information to a network side device, wherein the first information comprises at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

24. A multi-antenna transmit diversity indication apparatus, comprising:
a receiving module, configured to receive first information sent by a terminal, wherein the first information comprises at least one of the following: transmit diversity capability information of the terminal and transmit diversity state information of the terminal, the transmit diversity capability information is used for indicating a maximum quantity of physical antennas supported by the terminal for transmit diversity, and the transmit diversity state information is used for indicating an actual multi-antenna transmit diversity state of the terminal and/or an actual quantity of physical antennas for multi-antenna transmit diversity.

25. A terminal, comprising a processor and a memory, wherein the memory stores a program or an instruction executable on the processor, and the program or the instruction, when executed by the processor, implements the steps of the multi-antenna transmit diversity indication method according to any one of claims 1 to 12.

26. A network side device, comprising a processor and a memory, wherein the memory stores a program or an instruction executable on the processor, and the program or the instruction, when executed by the processor, implements the steps of the multi-antenna transmit diversity indication method according to any one of claims 13 to 22.

27. A readable storage medium, storing a program or an instruction, wherein the program or the instruction, when executed by a processor, implements the steps of the multi-antenna transmit diversity indication method according to any one of claims 1 to 12, or implements the steps of the multi-antenna transmit diversity indication method according to any one of claims 13 to 22.
